# EUROPEAN PATENT APPLICATION

(11) **EP 2 779 651 A1**
(43) Date of publication of application: **17.09.2014**
(21) Application number: 13158776.8
(22) Date of filing: 12.03.2013
(51) Int. Cl.: H04N 9/00

(54) **Configuring a system comprising a primary image display device and one or more remotely lamps controlled in accordance with the content of the image displayed**

(71) Applicant: TP Vision Holding B.V., 1097 JB Amsterdam (NL)
(72) Inventor: Kwisthout, Cornelis Wilhelmus, 1097 JB Amsterdam (NL); Tegenbosch, Jeroen, 1097 JB Amsterdam (NL); Bruyneel, Filip Marcel Denise, 1097 JB Amsterdam (NL); Seynaeve, Dirck, 1097 JB Amsterdam (NL); Peeters, Alfred, 1097 JB Amsterdam (NL); Catteau, Benoit Didier Raphael, 1097 JB Amsterdam (NL)
(74) Representative: Busch, Patrick

(57) **Abstract**

A method of configuring a system comprising a primary display device (12) and one or more remotely controllable lamps (13), comprising the steps of: presenting in a user interface the one or more remotely controllable lamps (13) and information about a geometry (23, 28) related to the primary display device (12); and using the user interface to enable a user to link selected ones of said lamps (13) with parts of said geometry (23, 28) in order to establish a control of the selected lamp (13) dependent on light control signals associated with the linked part of the geometry (23, 28).

## Description

### FIELD OF THE INVENTION

The present invention relates to a method of configuring a system comprising a primary display device and one or more remotely controllable lamps, in which system light control signals are available which are dependent on content displayed on areas of the primary display device. The invention further relates to an apparatus to perform the method and a computer program product adapted to perform the method.

### BACKGROUND OF THE INVENTION

Many Philips television models have since several years been equipped with Ambilight, where light sources built in to the television illuminate the wall behind the television and thus create a halo around the television. This illumination is arranged to depend on the video content shown on the screen of the television, and follows that video content in aspects of colour, intensity and geometry. The result of this ambient illumination is that the immersive experience of watching video on such a television is greatly enhanced.

The above approach illuminates only the wall behind the television. The immersive experience can be further enhanced by introducing more ambient illumination from lamps elsewhere in the room, not incorporated in the television but remotely controllable. This is disclosed in WO10061334 A1.

Extension of the known system with additional lamps or changing the position of the lamps in the room presents a new problem, in that the user needs to somehow configure the lamps to work in a desired manner with the television. For example, in case only the right side of the television screen lights up in a particular scene of a film, it would be desired for a lamp on the right side of the television to light up in the same colour and intensity, but for a lamp on the left side of the television to remain dark. The known system does not however reveal solutions to easily change the control of the lamps in case lamps are placed at other locations in the room or in case lamps are added to the system. Therefore a problem that needs to be solved is how to easily configure such a system in order to get the desired effects.

### SUMMARY OF THE INVENTION

It is an object of the invention to provide a solution to the above problem that is convenient for the user.

This is achieved, according to a first aspect of the invention, by a method of configuring a system comprising a primary display device and one or more remotely controllable lamps, in which system light control signals are available which are dependent on content displayed on areas of the primary display device, comprising the steps of:
- presenting in a user interface on an interface display the one or more remotely controllable lamps and information about a geometry related to the primary display device and its environment;
- using the user interface to enable a user to link selected ones of said lamps with parts of said geometry in order to establish a control of the selected lamp dependent on the light control signals associated with the linked part of the geometry.

According to a second aspect of the invention this is achieved by a portable apparatus comprising an interface display, a controller, communication means, and means for performing the above method.

According to a third aspect of the invention this is achieved by a computer program product stored on a computer-readable medium comprising software code adapted to perform the steps of the above method when executed on a data-processing apparatus.

The invention offers solutions that make it easy for a user to configure the system of television and lamps in such a way that the desired Ambilight effects can be obtained.

In an embodiment of the invention, the geometry presented in the user interface represents a room in which the location of the primary display device is indicated, and the selected lamps are linked to the geometry by the user by means of providing location information for the lamps with respect to the primary display device. This has the advantage of being intuitive for the user.

In another embodiment, the geometry presented in the user interface represents a plurality of regions related to the primary display device, and the selected lamps are linked to said regions by the user. This has the advantage of enabling more fine-tuning and optimizing of the Ambilight effects by the user.

In another embodiment of the invention, a lamp that is selected is controlled to give off a light signal. This has the advantage that the user gets clearly visible feedback on which lamp he is configuring; this makes it easier for the user, and mistakes are prevented.

### BRIEF DESCRIPTION OF THE DRAWINGS

These and other aspects of the invention will be apparent from and elucidated further with reference to the embodiments described by way of example in the following description and with reference to the accompanying drawings, in which
Fig. 1 shows a room with an Ambilight television and lamps;
Fig. 2 shows a diagram of a system with an Ambilight television and lamps;
Fig. 3 shows a graphical user interface for assigning lamps to a choice of two screen regions;
Fig. 4 shows a graphical user interface for assigning lamps to a choice of six screen regions;
Fig. 5 shows a graphical user interface for assigning lamps to positions in a room;
Fig. 6 shows a graphical user interface where colour and intensity are applied to lamp icons;
Fig. 7 shows a room with lamps and an Ambilight television equipped with a camera;
Fig. 8 shows a flow chart of the method steps for assigning lamps to screen regions.

### DETAILED DESCRIPTION OF EMBODIMENTS

The following description focusses on embodiments of the invention applied to a television with one or more external lamps. However, it must be appreciated that the invention is not limited to televisions only but may be applied in other display devices such as, for example, monitors . Nor is it limited to a specific display technology such as LCD, OLED, CRT or projection.

The lamps, too, may be of many types and shapes, besides what is presented here. The lamps could for example be wall mounted, hanging from a ceiling or free standing, and they could be equipped with LEDs, fluorescent or incandescent lamps, or any other type of lighting technology. They could be controlled by wired or wireless communication.

Recently wirelessly controllable lamps have appeared on the market, which the consumer can control in colour and intensity by using a wireless remote control device. The remote control device could be a smart phone or tablet containing software to control the lamps. The inventors have realized that such lamps are very suitable to enhance the Ambilight effects further. These lamps fulfil their normal illumination function, but during television watching the lamps may also fulfil an Ambilight function if the user so desires, and thus contribute to the immersive experience.

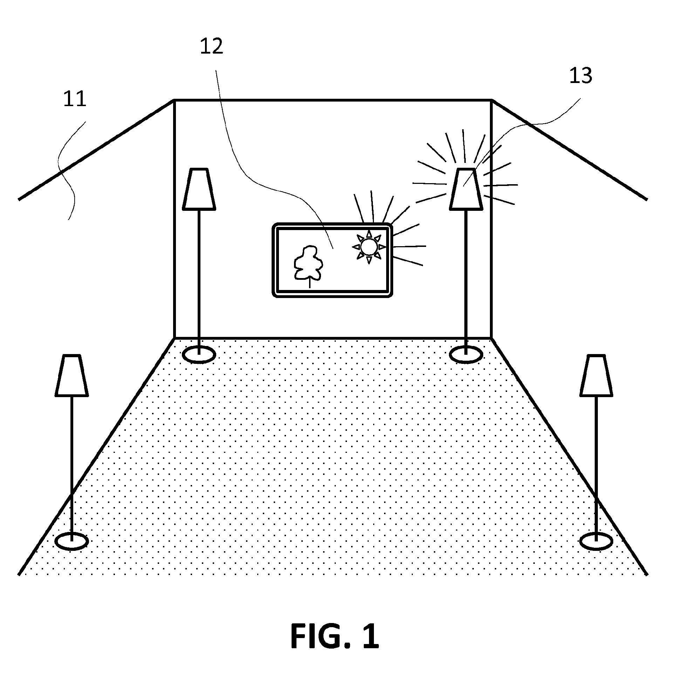

Figure 1 illustrates by way of example a suitable setting to which the current invention applies. It shows a room with walls 11 and a flat Ambilight television 12 mounted on one of the walls. The television screen is further on also referred to as the primary display device. Also shown in the room are several remotely controllable lamps 13. The lamps 13 can be wirelessly controllable, but also wired control of lamps can be used. In the example as shown in Fig. 1 the top right corner of the television screen is lighting up with bright sunlight in a particular video scene. The Ambilight feature of the television illuminates the wall around the top right corner of the television to create a halo of corresponding colour and intensity. To further enhance the Ambilight effect one of the lamps, the one closest to the top right corner of the television, also lights up in corresponding colour and intensity. Together, this creates an effect as if the sun on the screen lights up the right corner of the room. In fact, even if the television 12 is not equipped with Ambilight functionality, the illumination by the external lamp 13 lighting up in the right way still creates an Ambilight effect in the room, though of a somewhat lesser quality.

Figure 1 illustrates that in order to achieve the desired effect, the appropriate lamp must light up in relation to the video content shown on the television screen. In the example situation shown in Fig. 1, it must be the lamp in the far right corner of the room, closest to the right hand side of the television, that lights up and not one of the other lamps depicted in the room. It is therefore necessary to create a geometrical association between the lamps and the primary display device or regions of the primary display device and its immediate surroundings. This creation of geometrical associations forms the core of the present invention. This can be realized in several ways as will be described hereinafter.

The lamps can be controlled via a communication protocol, be it wired or wirelessly, and in this communication protocol the lamps can be identified uniquely with respect to the other lamps in the room. This is quite common in suitable technology standards such as ZigBee, Bluetooth, Wi-Fi or HomePlug. These protocols are well known and therefore not described in detail. The invention is focussing on the assignment of identified lamps to correspond to regions of the television screen in order to create the desired associations.

In Figure 1 the television 12 is an Ambilight television, but also televisions without light sources for illuminating the wall area around the screen can be used. In that case there still needs to be a means to derive light control signals dependent on content displayed on the television screen; this function is inherently present in an Ambilight television.

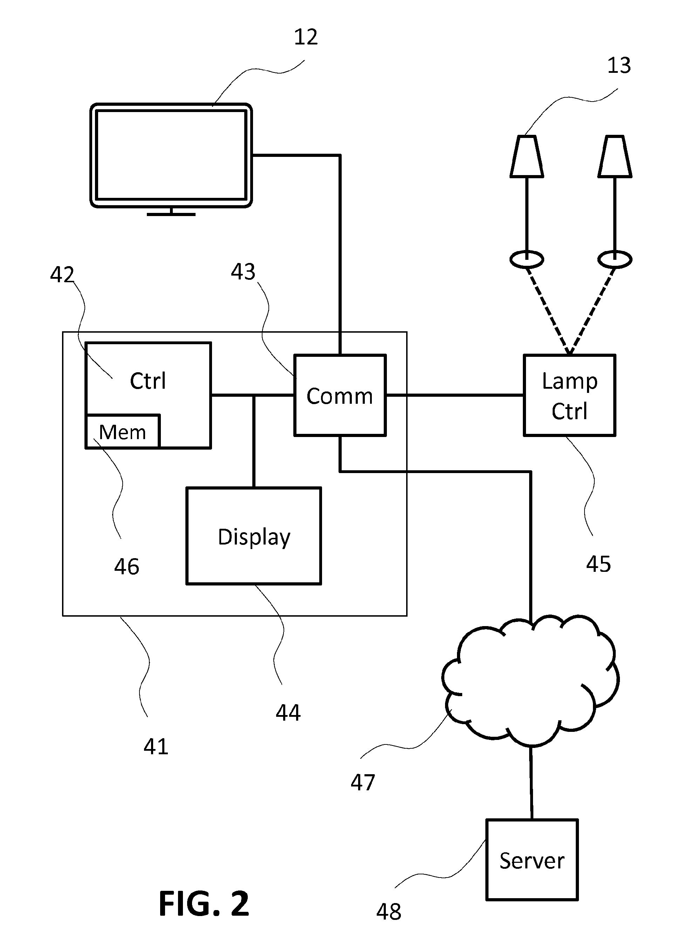

Figure 2 shows a system diagram for an embodiment of the system described above. A central control device 41 comprises a controller 42, means of communication 43 to communicate with the television 12 and the lamps 13. There may be a separate lamp controller 45 for the lamps. Also incorporated in the central control device 41 is an interface display 44. The function of the interface display will be described in detail further on in the description.

Controller 42 is of a usual programmable type which performs the control in accordance with a computer program available in a memory 46 of the controller.

The means for communication 43 are arranged to receive from the television 12 Ambilight control signals which are derived within the television in a usual manner and which are dependent on content displayed on areas of the primary display device. The means for communication 43 are further arranged to send lamp control signals to the lamps 13 for controlling the brightness and colour of the lamps in accordance with a control signal received from the control unit 42.

The control unit 42 derives the lamp control signals from the Ambilight control signal in accordance with a configuration which has be entered by a user using a graphical user interface of the device 41. The graphical user interface is presented to the user under control of a computer program stored in the memory 46 of the controller 42. The program can be a so-called ROM that is pre-programmed, but preferably the memory is RAM that can be loaded with the program. In that case it is beneficial to arrange the means for communications 43 so that it can be connected via a network 47, for example the Internet, to a download server 48 to initiate a download of the computer program from server 48.

Other configurations of the system than the one presented in Figure 2 are very well possible. For example, the lamp controller 45 may in fact be integrated in the central controller 41, and the central control device 41 may in fact be integrated in the television 12 itself.

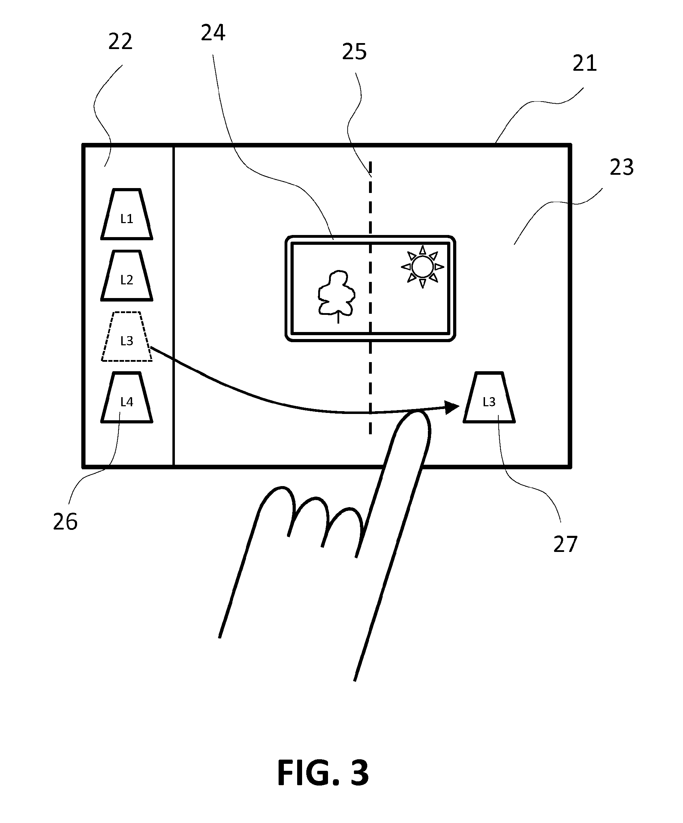

Embodiments of the user interface will now be described with reference to figures 3 to 8.

As a first embodiment of the invention, Figure 3 illustrates a first embodiment of a graphical user interface to assign lamps to regions of a television screen. It shows an interface display 21 on which the graphical user interface is displayed under control of controller 42. The display show two main areas: a lamp area 22 to display lamp icons 26 representing the available lamps that have been identified, and a geometry area 23 to display the geometry of a television screen, corresponding to the primary display device, and the regions that have been defined on and around it. The geometry area 23 shows a television screen representation 24 and one or more region dividing lines 25 that serve to demarcate the regions that have been defined, in this example simply a left and a right region. To link a lamp to a region, the user may select a lamp icon 26 in the lamp area 22 and move it to the desired region in the geometry area 23, in this example the right hand region. The lamp icon 27 will now be displayed in the geometry area, inside the assigned region to indicate that this particular lamp has been assigned to, and is now associated with, the right hand region of the primary display device causing that the controller 41 derives from the Ambilight control signals lamp control signals for the lamp associated with icon 27 associated with the position of the lamp icon 27 on the graphical user interface.

In the same way, the user may assign more lamps to their desired regions by moving their corresponding icons 27 to the desired region in the graphical user interface. Also, the user may move a lamp icon 27 from the geometry area 23 back to the lamp area 22 to indicate that the corresponding lamp should no longer participate in the Ambilight function. Also, the user may move a lamp icon 27 from a first region in the geometry area 23 to a second region, to indicate that the corresponding lamp should henceforth be associated with, and behave in agreement with that second region of the primary display device.

The acts of selecting and moving of the icon may be done in several ways. In Figure 3 the interface display is presented as a touch screen display. In this case the selection may be done by touching the lamp icon with a finger, and the moving of a lamp icon may be done by dragging it across the touch screen. Other ways may easily be imagined. If the screen has no touch functionality but some form of indicator or pointing device similar to a computer mouse is available, the user may point the indicator to a lamp icon and click an indicator button to achieve selection of that lamp icon. Moving of the lamp icon may be done by keeping the indicator button pressed while moving the indicator to the desired region and there releasing the button. Alternatively, a first button click may select and pick up a lamp icon, whereas a second click then releases the lamp icon and places it on the desired region. Even with only a simple conventional television remote control equipped with up/down/left/right direction buttons and an 'ok' button, selecting lamps and regions may easily be achieved by moving around the screen using the direction buttons, and using the ok button for the acts of selection and release of the selection.

The graphical user interface may be shown on a touch screen handheld device, as is illustrated in Figure 3. This device may be a tablet, a smart phone, a laptop, a dedicated advanced remote control of the television or the lamp system, or yet some other portable device comprising a display that serves as the interface display. In case of a smart phone or tablet, the software creating the graphical user interface and performing the control actions would most conveniently be downloaded on to that device as an app or downloadable application. This may be done using a connection of the portable device to Internet to download the application software, for example from an app store. Alternatively, the application software could be downloaded on a computer and then transferred to the portable device using the means of communication 43.

In another embodiment the graphical user interface may also be displayed on the primary display device itself. For example a television may well serve as both primary and interface display device. In that case touch screen functionality is usually not available, and a pointing device or conventional remote control may be used as described above.

The term graphical user interface is used because the use of graphical elements is the most likely way to guide the user conveniently, but it must be understood that the use of such elements is not strictly required for the present invention to work. The user interface may be implemented in other ways, for example it could be text-only.

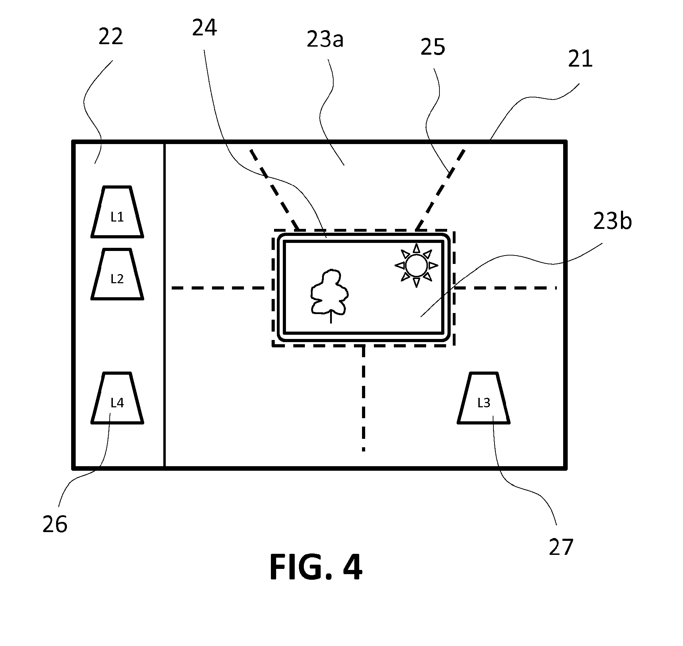

The simple region division of Figure 3 serves as an example, and many more geometries may be imagined. Figure 4 illustrates another embodiment, this one with more regions. In this example the geometry area 23 is divided into 6 regions: top left, bottom left, top right, bottom right, top central 23a, and central 23b. The regions bordering on the television screen representation 24 would signify Ambilight behaviour in relation to the video shown close to the corresponding edge of the primary display device. The central region 23b may signify an average Ambilight behaviour, corresponding to the video on the entire primary display device as a whole, and not just one particular part of it. Instead of an average behaviour, it may also signify a light effect representing for example a dominant colour derived from the video scene. This may be suitable for association with lamps located behind the viewer. Similarly, the top centre region 23a may for example be suitable for association with lamps mounted on the ceiling of a room.

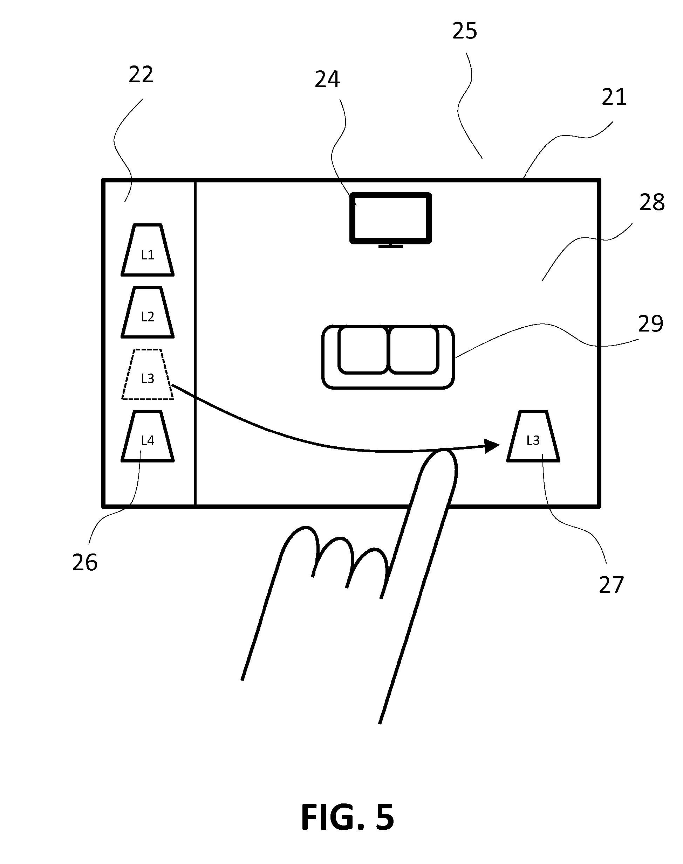

Figure 5 illustrates a somewhat different embodiment of the invention. In this embodiment the geometry 28 is arranged to represent a top view of a room, in which the television screen representation 24 is positioned. This room should be seen as a symbolic room, it need not match the actual room that the television is placed in. Yet the user will recognize a room, and the position of the television. To make it easier for the user to identify, some furniture may be represented, like a sofa representation 29. The use can now again place the lamp icons 27 as described above, but their location after placement will now signify a geometrical position in the room, relative to the television. In fact, the user may move the television screen representation 24 and the sofa representation 29, to achieve a better likeness of the actual room. Different from the previous embodiments, the user does not now indicate to which part of the video image a lamp's behaviour should be linked. Instead, the system needs to derive that link from the positioning of the lamps 13 relative to the television 12. This however is fairly straight-forward; for example, it is easy to distinguish left and right for the lamps 13 closest to the television 12, a centrally placed lamp may be assumed to be ceiling mounted, or lamps further away may translate into more average behaviour . More advanced methods may be imagined however, for example the depth information of a 3D video scene may be used to derive light control signals suitable for lamps closer to the front or further to the rear. Thus the system may assign lamps to regions as described above, based on the geometrical information given by the user. The symbolic room of Figure 5 may be visually divided into room regions to guide the user in what will be interpreted as left, right, front, rear, and already suggest how this may map to regions related to the primary display device. It may also be arranged in such a way that after placing the lamps in a room related user interface such as shown in Figure 5, in a next step the user can see the resulting links between lamps and regions thus created in a region related user interface such as is shown in Figures 3 or 4, and the user may apply further refinements as desired.

While a graphical user interface such as presented in Figure 3, 4 and 5 shows to the user how many lamps are available for Ambilight functionality, it may still not sufficiently identify these lamps to the user. The lamp icons 27 may be uniquely identified, perhaps by a numbering such as "L1, L2, L3..." and so forth, but that does not tell the user which lamp icon 27 corresponds to, for example, the lamp standing on the right hand side of the television. To overcome this problem, the inventors have proposed that whenever a lamp icon is selected, for example by touching the icon on a touch screen or selecting the icon with a pointer device, the corresponding lamp in the room is controlled to light up or generating another light signal, e.g. light pulses, so that the user can immediately identify which lamp is represented by that lamp icon, and so can easily decide which region it should be assigned to. The lighting up of the selected lamp can easily be achieved by means of the control mechanisms available for the lamps. Once a lamp icon has been placed in a region, its corresponding lamp may be controlled to assume the colour and intensity it should have based on the desired Ambilight effect.

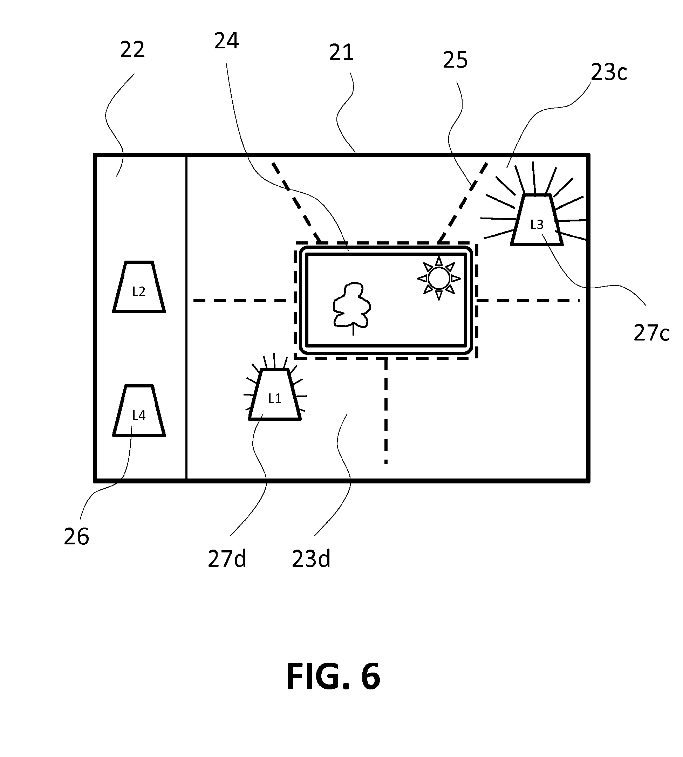

To further enhance the ease of use of the measures described above, the inventors have realized that the use of appropriate colours in the graphical user interface may guide the user even more in the task of assigning lamps to the right regions. This is illustrated as a further embodiment in Figure 6. In this example the graphical user interface shown on the display 21 will reflect the video content being shown on the television screen. To this end the television screen representation 24 will reflect the actual video content being shown on the television screen, albeit in a low resolution and small scale. In the example of Figure 6, the sun in the top right corner of the television will be visible. To guide the user, a lamp icon 27c located in the bordering region 23c may be coloured yellow and may light up brightly to display the Ambilight effect triggered by the sun. Similarly, the tree shown on the left of the screen may cause a lamp icon 27d placed in the bordering region 23d to glow with a low intensity green, the Ambilight effect related to the tree. This illustrates how the use of colour and intensity in the graphical user interface may represent colour and intensity of the desired Ambilight effect, and thus guide the user in making the desired assignments.

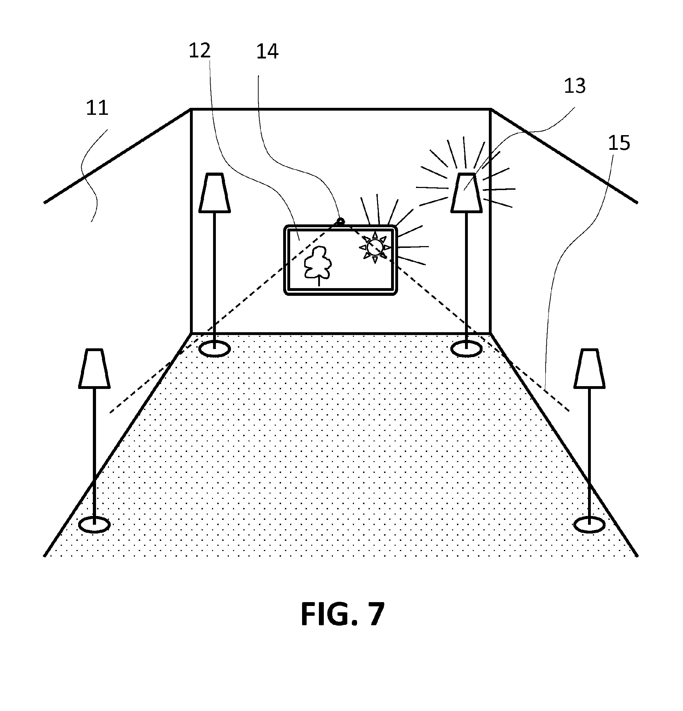

The inventors have realized that the assignment of lamps to regions may be facilitated by the use of a camera placed in the same room as the television and lamps 13. In a further embodiment of the invention, this camera may be integrated in the television, as is often the case to support Skype or other means of video communication. This situation is shown in Figure 7, where a camera 14 is integrated in the top border of the Ambilight television 12. Such a camera has a certain limited field of view 15. Some of the lamps 13 in a room may be positioned within that field of view, while others are placed outside it.

With standard image analysis techniques, lamps 13 can be recognized in the image captured by the camera 14. This analysis could be performed by a processor in the television 12, but could also be done for example in a tablet or smart phone. The system could for example switch the lamps 13 on and off one by one using the control mechanisms, and then detect a bright one of the lamps 13 in the camera image, or perhaps only the light radiated by one of the lamps 13 just outside the field of view. The lamps 13 could also be set to different colours in order to facilitate identification of each lamp in the camera image. In this way, the system will be able to establish the relative position for some or even all of the lamps 13. For those lamps 13 of which the relative position could be established, the corresponding lamp icon may already be placed in the most suitable part of the geometry in the graphical user interface before the user starts the task of assigning lamps 13 to regions. After this pre-assigning, the user needs less time and effort to come to a satisfactory assignment of lamps 13. Should the user disagree with some of the pre-assignments, then he may simply move the misplaced icon to its desired location, or to the region of non-participating lamps.

In the same way, in other embodiments of the invention a camera built in to a laptop, tablet or smart phone may be used to aid in pre-assignment of lamps to regions. In such a case the camera may be aimed in the direction of the television 12, and the position of lamps 13 may be established similarly as described above, again with switching the lamps 13 on and off or selecting lamp colours to aid identification of the individual lamps 13 in the camera image.

Apart from linking lamps 13 to the geometry, more characteristics of the lamps' participation in Ambilight may be determined by the user. For a lamp 13 to not participate in Ambilight at all, it may suffice to simply leave it in the available lamp region 22, which then gets the meaning of a region for available but not participating lamps 13. But also the characteristics of participating lamps 13 may be set. For example, there may be a mode setting 'relaxed' to indicate that a lamp 13 participates slowly, gradually following changes in the video shown on the primary display device. Similarly there may be a mode setting 'dynamic', in which case the lamp 13 will also follow fast changes in the video. Other settings may affect colour saturation or brightness of the lamps participating in Ambilight effects, or the degree in which they are influenced by depth information in 3D video scenes.

Such properties may be determined by the user in the same graphical user interface as described above with some additional provisions. For example it may be arranged that repeatedly clicking on, or touching, an already linked lamp icon 27 causes it to step through a discrete set of available modes such as 'dynamic' and 'relaxed'. For light properties such as intensity of colour saturation, additional graphical control elements such as sliders may be added.

For lamps 13 not participating in Ambilight, such light properties may still be set and in that case this would simply affect the lamp's regular operation, which is then independent of the video content shown on the primary display device.

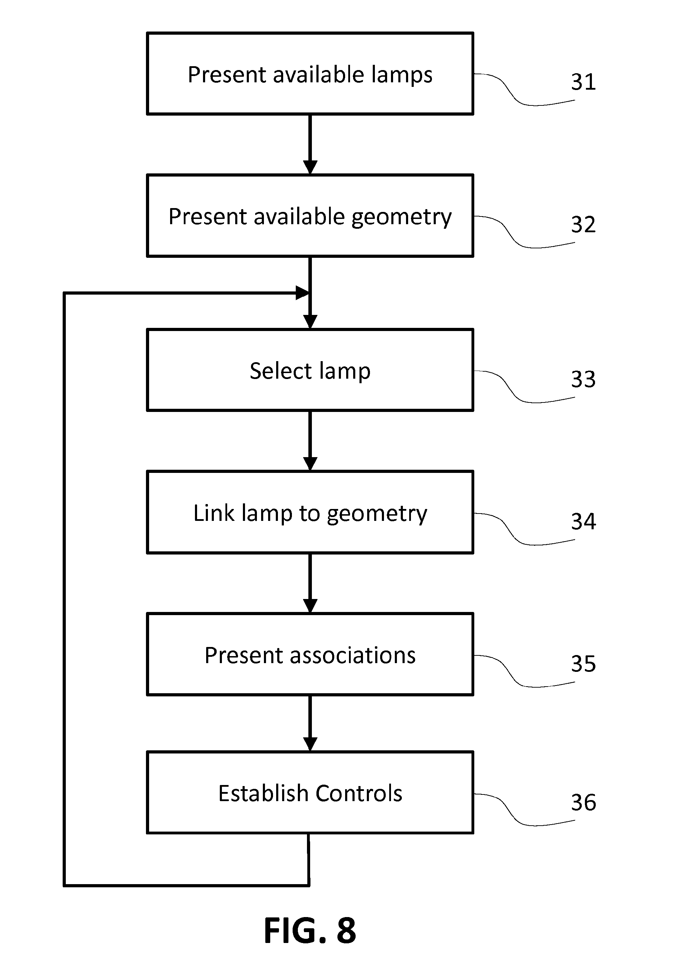

Several example embodiments have been presented above, and many more can be conceived. Essential to the invention are the methods by which the goal of linking lamps 13 to the geometry is achieved. A basic method, corresponding to the first embodiment of Figure 3, is presented in Figure 8 as a flow chart showing the most relevant steps. It begins with presenting in the user interface the available lamps to the user, step 31. In the above described embodiments this is done by showing lamp icons 26 representing the individual lamps. Also presented is, in step 32, the primary display device related geometry. The order of steps 31 and 32 is not important, and they may well appear to the user as simultaneous. Next follows an iteration of steps in which the user can repeatedly assign lamps to regions by selecting a lamp in step 33, and linking the lamps to a part of the geometry, step 34. The created associations are presented to the user in step 35, and the control of the selected lamp dependent on the light control signals associated with the linked part of the geometry is established in step 36. In the above embodiment illustrated in Figure 2, this is done by dragging and dropping lamp icons 26, 27 in display related regions 23, 23a, 23b. These steps 33 through 35 are repeated until the user is satisfied with the associations created. Step 36 may be part of the repeated steps, but may also be performed just once, at the end.

Although several embodiments of the present invention have been illustrated in the accompanying drawings and described in the foregoing detailed description, it will be understood that the invention is not limited to the embodiments disclosed, but is capable of numerous modifications without departing from the scope of the invention as set out in the following claims.

## Claims

1. A method of configuring a system comprising a primary display device (12) and one or more remotely controllable lamps (13), in which system light control signals are available which are dependent on content displayed on areas of the primary display device (12), comprising the steps of:
- presenting in a user interface on an interface display (21, 44) the one or more remotely controllable lamps (13) and information about a geometry (23, 28) related to the primary display device (12) and its environment;
- using the user interface to enable a user to link selected ones of said lamps (13) with parts of said geometry (23, 28) in order to establish a control of at least one selected lamp (13) dependent on the light control signals associated with the linked part of the geometry (23, 28).

2. A method according to claim 1, where the geometry (23) represents a plurality of regions (23a-d) related to the primary display device (12), and where the selected lamps (13) are linked to said regions (23a-d) by the user.

3. A method according to claim 1, where the geometry (28) represents a room in which the location of the primary display device (12) is indicated, and where the selected lamps (13) are linked to the geometry (28) by the user by means of providing location information for the lamps (13) with respect to the primary display device (12).

4. A method according to claim 1, 2 or 3, where the one or more controllable lamps (13) are each presented in the graphical user interface by a lamp icon (26, 27).

5. A method according to claim 4, where the linked lamp icons (27, 27c, 27d) are coloured according to one or more properties of a video scene displayed in an area of the primary display device(12) that corresponds to the selected region (23a-d).

6. A method according to claim 4 or 5, where the step of linking a lamp(13) to a part of the geometry (23,28) is performed by moving the lamp icon (26,27) across the interface display (21,44) to an area of the interface display where said part of the geometry is represented.

7. A method according any of the previous claims, where the primary display device (12) is also used as the interface display (21,44).

8. A method according to any of the previous claims where the user interface display (21,44) shows a representation of the video content playing on the primary display device (12).

9. A method according to any of the previous claims, where a lamp (13) that is selected is controlled to give off a light signal.

10. A method according to claim 2, in which one of the plurality of regions (23b) is arranged to signify the entire primary display screen, or a central region thereof.

11. A method according claim 4, 5 or 6 in which the graphical user interface contains an independent area (22) not associated to any part of the geometry (23,28), whereby the control of lamps (13) represented by lamp icons (26) in the independent area (22) is not dependent on the content displayed on the primary display device (12).

12. A method according claim 4, 5, 6 or 11 in which the user can control light properties of the remotely controllable lamps (13) by interacting with the lamp icons (26, 27).

13. A method according to any of the previous claims, comprising the additional intermediate step of creating associations between lamps (12) and parts of the geometry (23,28) based on analysis of an image generated by a camera present in the room where the primary display (12) and lamps (13) are present.

14. An apparatus comprising
- a primary display device (12) for displaying video content;
- means for deriving light controls signals dependent on the video content;
- communication means (43) for sending the light control signals to one or more remotely controllable lamps (13); and
- configuration means for performing the method of claim 7.

15. A portable apparatus comprising
- an interface display (21,44);
- communication means (43) for receiving light control signals from a primary display device (12) and for sending the light control signals to one or more remotely controllable lamps (13); and
- means for performing the method according to any of claims 1 to 13.

16. A computer program product stored on a computer-readable medium comprising software code adapted to perform the steps of the method according to any of claims 1 to 13 when executed on a data-processing apparatus.

17. Method of performing a download of a computer program product comprising software code adapted to perform the steps of the method according any of the claims 1 to 13 when executed at the destination of the download.
